# EUROPÄISCHE PATENTSCHRIFT

(11) **EP 2 985 636 B1**
(45) Veröffentlichungstag und Bekanntmachung des Hinweises auf die Patenterteilung: **25.07.2018**
(21) Anmeldenummer: 14180502.8
(22) Anmeldetag: 11.08.2014
(51) Int. Cl.: G01V 8/20, H04B 10/114

(54) **Verfahren zum Ausrichten einer Sensoreinrichtung**
Method for aligning a sensor device
Procédé d'alignement d'un dispositif de capteurs

(43) Veröffentlichungstag der Anmeldung: 17.02.2016
(73) Patentinhaber: Leuze electronic GmbH + Co KG, 73277 Owen/Teck (DE)
(72) Erfinder: Grimm, Hans, 82256 Fürstenfeldbruck (DE); Bischof, Stefan, 89340 Leipheim (DE)
(74) Vertreter: Ruckh, Rainer Gerhard

(56) Entgegenhaltungen:
- EP-A1- 1 437 542
- EP-A1- 1 600 684
- DE-A1-102006 050 189
- DE-A1-102008 028 970
- DE-A1-102012 111 345
- DE-U1-202006 012 454
- US-A- 5 245 178

## Beschreibung

Die Erfindung betrifft ein Verfahren zum Ausrichten einer Sensoreinrichtung sowie einen Ausrichtempfänger zur Durchführung des Verfahrens.

Derartige Sensoreinrichtungen können insbesondere in Form von Lichtvorhängen ausgebildet sein. Ein derartiger Lichtvorhang umfasst eine Sendereinheit mit einer Anordnung von Lichtstrahlen emittierenden Sendern und eine Empfängereinheit mit einer Anordnung von Lichtstrahlen empfangenden Empfängern. Zur Detektion von Objekten innerhalb eines Überwachungsbereichs sind die Sendereinheit und die Empfängereinheit an gegenüberliegenden Rändern des Überwachungsbereichs so angeordnet, dass bei freiem Überwachungsbereich die von jeweils einem Sender emittierten Lichtstrahlen auf einen diesem zugeordneten Empfänger treffen. Ein in den Überwachungsbereich eindringendes Objekt wird dadurch erkannt, dass wenigstens eine der von den Lichtstrahlen gebildeten Strahlachsen des Lichtvorhangs unterbrochen wird.

Vor dem Arbeitsbetrieb des Lichtvorhangs, während dessen die Objektdetektion erfolgt, müssen die Sendereinheit und die Empfängereinheit in geeigneter Weise ausgerichtet werden. Als Ausrichthilfe hierfür wird beispielsweise ein Ausrichtlaser eingesetzt, der Richtstrahlen im sichtbaren Wellenlängenbereich emittiert. Der Ausrichtlaser wird an der Sendereinheit oder der Empfängereinheit nachträglich montiert. Zur Ausrichtung der Sendereinheit und der Empfängereinheit wird dann geprüft, ob die Richtstrahlen des Ausrichtlasers auf ein Ziel an der Empfängereinheit geführt sind, wobei das Ziel von einer Zielmarke gebildet sein kann.

Generell ist hierbei nachteilig, dass nicht die Strahlachsen des Lichtvorhangs selbst, die von den einzelnen Lichtstrahlen der Sender gebildet sind, ausgerichtet werden. Die Richtstrahlen als zusätzliche Lichtachse geben damit nur indirekt und dementsprechend unvollständig eine Information über die tatsächliche Ausrichtung der Sender zu den Empfängern. Derartige Ungenauigkeiten ergeben sich insbesondere durch Toleranzen der Befestigungsposition des Ausrichtlasers. Weiterhin stimmen oft auch die Abstrahlcharakteristiken des Ausrichtlasers einerseits und der Sender andererseits nicht überein.

Generell emittiert der Ausrichtlaser Richtstrahlen die eine schmale Abstrahlkeule aufweisen. Trotzdem ist insbesondere bei größeren Abständen der Auftreffpunkt der Richtstrahlen auf der Empfängereinheit oder Sendereinheit schlecht sichtbar. Damit das schmale Lichtbündel überhaupt auf das jeweilige Ziel der Empfängereinheit oder Sendereinheit auftrifft, ist eine exakte Positionierung des Ausrichtlasers an der Sendereinheit oder der Empfängereinheit erforderlich, was die Durchführung der Justage aufwändig gestaltet. Schließlich ist nachteilig, dass dann, wenn die Einheit, an der der Ausrichtlaser montiert wird, selbst ausgerichtet wird, um die Justage vorzunehmen, diese Justageposition wieder zumindest teilweise verloren geht, wenn der Ausrichtlaser wieder von dieser Einheit abgenommen wird.

Die DE 10 2006 050 189 A1 betrifft ein Lichtgitter mit einer Sendeeinheit und einer Empfangseinheit, wobei die Sendeeinheit eine Vielzahl von Lichtsendern und einen Ausrichtlichtsender aufweist, und wobei jedem Lichtsender ein Lichtempfänger der Empfangseinheit zugeordnet ist, der auf von einem Lichtsender ausgesandtes Gitterlicht anspricht, wenn der Lichtempfänger innerhalb eines ersten Abstrahlwinkels zu dem Lichtsender und der Lichtsender innerhalb eines ersten Sichtwinkels zu dem Lichtempfänger ausgerichtet ist. Dabei weist die Empfangseinheit einen Ausrichtlichtempfänger auf, der auf Ausrichtlicht anspricht, wenn der Ausrichtlichtempfänger innerhalb eines zweiten Abstrahlwinkels zu dem Ausrichtlichtsender und der Ausrichtlichtsender innerhalb eines zweiten Sichtwinkels zu dem Ausrichtlichtempfänger ausgerichtet ist, wobei der zweite Abstrahlwinkel größer als der erste Abstrahlwinkel und/oder der zweite Sichtwinkel größer als der erste Sichtwinkel ist und wobei Ausrichtlichtsender und Ausrichtlichtempfänger von einer Steuerung des Lichtgitters im Betrieb unberücksichtigt bleiben.

Die US 5 245 178 A betrifft ein Lichtgitter mit einer einer Anzahl von Lichtstrahlen emittierenden Sendern aufweisenden Sendereinheit und einer eine Anzahl von Empfängern aufweisenden Empfangseinheit. Zur Überwachung eines Gefahrenbereichs an einer Maschine wird geprüft, ob der Strahlengang der Lichtstrahlen eines Senders zu einem zugeordneten Empfänger unterbrochen ist. Vor einen der Empfänger kann temporär eine Empfangseinheit mit einem Bewegungsmelder umfassend einen Strahlteilerspiegel und einen Photodetektor angebracht werden. Mit dem Bewegungsmelder kann durch eine zeitaufgelöste Auswertung der Signale des Photodetektors bestimmt werden, wie weit das Lichtgitter vom Gefahrenbereich entfernt ist.

Die DE 20 2006 012 454 U1 betrifft einen optoelektronischen Sensor mit einem Lichtsender, wobei dieser wenigstens ein Lichtsignal aussendendes Sendeelement aufweist und einen über eine Distanz zu dem Lichtsender angeordneten Lichtempfänger, der wenigstens ein Empfangselement zum Empfangen der Lichtsignale des Sendeelementes aufweist, wobei eine Auswerteeinheit zur Auswertung einer auf das Empfangselement gelangende Lichtstärke als Maß für die Güte einer Ausrichtung vorhanden ist. Dem Sendeelement ist ein Filterelement nachgeordnet, wobei das Filterelement einen inneren Bereich aufweist, der Licht im Wesentlichen ungehindert durchlässt und der innere Bereich von einem lichtdämpfenden äußeren Bereich umgeben ist.

In der DE 102012 111 345 A1 wird ein Handgerät, ein Sensor und ein Verfahren zur Ausrichtung eines Sensors zur Erfassung von Objekten in einem Überwachungsbereich angegeben, bei dem auf einem Handgerät ein die momentane Ausrichtung darstellendes Überlagerungsbild angezeigt wird, das zumindest einen Teil des Überwachungsbereichs und eine Zielanzeige einer Position eines von dem Sensor erzeugten Lichtflecks darstellt. Dabei nimmt der Sensor ein Sichtbereichsbild des Überwachungsbereichs auf, bestimmt die Position des Lichtflecks in dem Sichtbereichsbild und überträgt das Sichtbereichsbild und die Position an das Handgerät. Das Handgerät erzeugt das Überlagerungsbild basierend auf dem Sichtbereichsbild und der Position und zeigt es an.

Der Erfindung liegt die Aufgabe zugrunde, ein Verfahren und ein System bereitzustellen, welche mit geringem Aufwand eine exakte und reproduzierbare Ausrichtung einer Sensoreinrichtung ermöglichen.

Zur Lösung dieser Aufgabe sind die Merkmale der unabhängigen Ansprüche vorgesehen. Vorteilhafte Ausführungsformen und zweckmäßige Weiterbildungen der Erfindung sind in den Unteransprüchen beschrieben.

Die Erfindung betrifft ein Verfahren zum Ausrichten einer Sensoreinrichtung, welche eine Sendereinheit mit wenigstens einem Lichtstrahlen emittierenden Sender und eine Empfängereinheit mit wenigstens einem dem Sender zugeordneten Empfänger aufweist, welche in einem Arbeitsbetrieb der Sensoreinrichtung die Lichtstrahlen des Senders empfängt. Zum Ausrichten der Sendereinheit wird auf die Empfängereinheit vor dem Empfänger ein Ausrichtempfänger platziert, welcher einen größeren Öffnungswinkel als der Empfänger aufweist. Mit dem Ausrichtempfänger werden die vom Sender emittierten Lichtstrahlen empfangen. Abhängig von der am Ausrichtempfänger empfangenen Lichtmenge der Lichtstrahlen erfolgt mit einer Anzeigeeinheit eine Anzeige.

Ein wesentlicher Vorteil des erfindungsgemäßen Verfahrens besteht darin, dass zur Ausrichtung der Strahlengang der Lichtstrahlen des oder eines Senders der Sensoreinrichtung selbst herangezogen wird. Die Signale des hierfür eingesetzten Ausrichtempfängers liefern somit ein direktes Maß für die korrekte Ausrichtung der einzelnen Einheiten der Sensoreinrichtung, wodurch eine besonders genaue Ausrichtung der einzelnen Einheiten der Sensoreinrichtung, insbesondere der Sendereinheit und der Empfängereinheit, ermöglicht wird.

Wesentlich hierbei ist die Positionierung des Ausrichtempfängers vor dem Empfänger der Empfängereinheit, wobei der Ausrichtempfänger möglichst exakt vor dem Empfänger zu positionieren ist. Der Ausrichtempfänger ersetzt somit diesem Empfänger, so dass die mit dem Ausrichtempfänger generierten Signale ein direktes und genaues Maß für die Ausrichtung des Senders zu dem Empfänger liefern.

Ein wesentlicher Aspekt der Erfindung besteht darin, dass der Öffnungswinkel des Ausrichtempfängers größer, vorzugsweise erheblich größer ist als der Öffnungswinkel des oder der Empfänger. Dadurch wird ein vergrößerter Einfangbereich für die Lichtstrahlen des zugeordneten Senders erhalten, das heißt im Falle einer noch vorliegenden mangelhaften Ausrichtung von Sendereinheit und Empfängereinheit, bei welcher die Lichtstrahlen des Senders nicht mehr auf den Empfänger treffen würden, treffen sie dennoch noch auf den am Empfänger angeordneten Ausrichtempfänger, so dass die Signale des Ausrichtempfängers bereits in diesem Fall ein Maß für die bestehende Ausrichtung liefern. Damit wird eine komfortable und reproduzierbare Ausrichtmöglichkeit geschaffen, da während eines Ausrichtvorgangs, der generell vor dem Arbeitsbetrieb der Sensoreinrichtung durchzuführen ist, die Sendereinheit und die Empfängereinheit zu Beginn dieses Ausrichtvorgangs nicht vorjustiert werden müssen, da auch in einem noch stark dejustierten Zustand der Ausrichtempfänger aufgrund seines großen Öffnungswinkels bereits Lichtstrahlen des zugeordneten Senders empfängt, so dass die vom Ausrichtempfänger generierten Signale zur Ausrichtung der Sensoreinrichtung herangezogen werden können.

Durch den großen Öffnungswinkel des Ausrichtempfängers ergibt sich als weiter Vorteil, dass bei fortlaufender Ausrichtung am Ausrichtempfänger bei Empfang der Lichtstrahlen eines Senders eine Lichtverteilungsfunktion mit flachen Flanken erhalten wird. Dies bedeutet, dass bei fortschreitender Annäherung an die optimale Ausrichtung der Lichtstrahlen auf den Ausrichtempfänger die Signale des Ausrichtempfängers zwar langsam jedoch stetig ansteigen, so dass die Signale des Ausrichtempfängers ein quantitatives Maß für die Güte der Ausrichtung liefern.

Das erfindungsgemäße Verfahren kann sowohl für Lichtschranken mit nur einem Sender und Empfänger als auch für Lichtvorhänge mit einer Mehrfachanordnung von Sendern und Empfängern eingesetzt werden. Bei Lichtvorhängen kann je nach Funktionsweise des Lichtvorhangs und Güte der Strahlführung der einzelnen Strahlachsen der Ausrichtempfänger Lichtstrahlen nicht nur von einem sondern von mehreren Sendern empfangen. Da der Ausrichtempfänger exakt vor einem Empfänger des Lichtvorhangs vorgeordnet ist, spiegelt dies exakt die Verhältnisse im Arbeitsbetrieb des Lichtvorhangs wieder.

Das erfindungsgemäße Verfahren kann auch für komplexere Sensoreinrichtungen eingesetzt werden. Insbesondere kann die Sensoreinrichtung zusätzlich zur Sendereinheit und Empfängereinheit eine Umlenkeinheit mit wenigstens einem Umlenkspiegel aufweisen, wobei in einem Arbeitsbetrieb der Sensoreinrichtung die von einem Sender der Sendereinheit emittierten Lichtstrahlen über den Umlenkspiegel zu dem zugeordneten Empfänger der Empfängereinheit geführt werden. Zum Ausrichten der Sendereinheit wird bezüglich der Umlenkeinheit der Ausrichtempfänger vor dem Umlenkspiegel platziert.

Nach Ausrichten der Sendereinheit bezüglich der Umlenkeinheit wird zum Ausrichten der Umlenkeinheit bezüglich der Empfängereinheit der Ausrichtempfängervor dem zugeordneten Empfänger der Empfängereinheit platziert.

Der erfindungsgemäße Ausrichtempfänger ist Bestandteil einer Ausrichtempfängereinheit, wobei die Ausrichtempfängereinheit eine Rechnereinheit aufweist. Am Ausgang des Ausrichtempfängers anstehende Signale werden in der Rechnereinheit ausgewertet, wobei in Abhängigkeit der Signale Ausgangsgrößen generiert werden, die ein Maß für die Güte der Ausrichtung darstellen. Die Rechnereinheit weist Mittel zum Übertragen der Ausgangsgröße an die Anzeigeeinheit auf. Die Ausrichtempfängereinheit weist Mittel zur Fixierung an einer Empfängereinheit oder Umlenkeinheit auf.

Mit den Mitteln zur Fixierung kann die Ausrichtempfängereinheit reversibel lösbar an einer Empfängereinheit oder Umlenkeinheit befestigt werden. Beispielsweise können diese Mittel von einem Klettband, einem Gurt oder von einer Schraubverbindung ausgebildet sein.

In der Rechnereinheit der Ausrichtempfängereinheit werden in Abhängigkeit der vom Ausrichtempfänger empfangenen Signale Ausgangsgrößen generiert, die ein Maß für die Güte der Ausrichtung der zu justierenden Einheiten darstellen. Diese Ausgangsgrößen werden an der Anzeigeeinheit während der Ausrichtung fortlaufend angezeigt, so dass eine Bedienperson anhand dieser Ausgangsgrößen den Ausrichtvorgang kontrollieren kann. Um eine reproduzierbare Anzeige zu erhalten, kann, über die Rechnereinheit gesteuert, durch eine Verstärkungsanpassung eine Normierung der Ausgangsgrößen erfolgen, welche insbesondere von den Ausrichtempfängern registrierten Lichtintensitäten gebildet sind.

Gemäß einer ersten Variante ist die Anzeigeeinheit in der Ausrichtempfängereinheit selbst integriert, so dass eine Bedienperson direkt am Ausrichtempfänger selbst den Ausrichtvorgang kontrollieren kann.

Vorteilhaft ist die Anzeigeeinheit dann als optische Anzeige ausgebildet. Beispielsweise kann die optische Anzeige von drei Leuchtdioden mit unterschiedlichen Farben rot, grün und blau gebildet sein. Die blaue Leuchtdiode leuchtet beispielsweise allein dann, wenn bei eingeschaltetem Ausrichtempfänger kein Signal vorliegt, also die zu justierenden Einheiten völlig dejustiert sind, so dass vom zugeordneten Sender kein Licht auf den Ausrichtempfänger trifft. Die rote Leuchtdiode leuchtet allein beispielsweise dann, wenn ein schwaches Lichtsignal vom zugeordneten Sender am Ausrichtempfänger registriert wird, also die Ausrichtung der Einheiten nur nicht hinreichend gut ist. Schließlich kann nur die grüne Leuchtdiode leuchten, wenn die Ausrichtung eine hinreichend große Lichtmenge, die beispielsweise einen vorgegebenen Schwellwert überschreitet, registriert wird.

Alternativ kann als optische Anzeige eine blinkende Leuchtdiode verwendet werden. Die Blinkfrequenz der Leuchtdiode nimmt vorteilhaft mit steigender Ausrichtgüte, das heißt mit steigender am Ausrichtempfänger registrierter Lichtmenge zu. Damit bildet die Anzeige eine Proportionalanzeige, anhand derer der Ausrichtvorgang besonders exakt durchgeführt werden kann.

In einer alternativen Ausgestaltung kann die Anzeigeeinheit eine von der Ausrichtempfängereinheit räumlich getrennte Einheit bilden. In diesem Fall weist die Anzeigeeinheit Übertragungsmittel auf, mittels derer Datenpakete, insbesondere direkt die in der Rechnereinheit generierten Ausgangsgrößen, an die Anzeigeeinheit gesendet und dort angezeigt werden.

Beispielsweise sind die Übertragungsmittel von einer WLAN- oder Bluetooth-Schnittstelle gebildet.

Insbesondere ist die externe Einheit ein Smartphone.

Als Anzeigeeinheit können akustische Signalgeber vorgesehen sein. Auch optische Anzeigen auf dem Display des Smartphones sind möglich. Auch kann die Ausgangsgröße durch Vibrationen des Smartphones angezeigt werden. Generell können auch externe Einheiten in Form von Tablet-Rechnern, Laptops und dergleichen vorgesehen sein.

Gemäß einer vorteilhaften Variante der Erfindung weist die Sensoreinrichtung eine Sendereinheit mit wenigstens einem Lichtstrahlen emittierenden Sender und eine Empfängereinheit mit wenigstens einem Lichtstrahlen empfangenden Empfänger zur Erfassung von Objekten in einem Überwachungsbereich auf. In der Sensoreinrichtung ist ein Ausrichtempfänger integriert, welche einen größeren Öffnungswinkel als der oder jeder Empfänger aufweist. Mit dem Ausrichtempfänger werden die vom Sender oder einem weiteren Sender emittierten Lichtstrahlen empfangen. Abhängig von der am Ausrichtempfänger empfangenen Lichtmenge der Lichtstrahlen erfolgt mit einer Anzeigeeinheit eine Anzeige.

Im Gegensatz zu den vorigen Varianten ist somit der Ausrichtempfänger fest in der Sensoreinrichtung integriert.

Diese Variante ist besonders vorteilhaft bei einer Sensoreinrichtung in Form eines Lichtvorhangs, welcher eine Sendereinheit mit einer Mehrzahl von Lichtstrahlen emittierenden Sendern und einer Mehrzahl von Lichtstrahlen empfangenden Empfängern aufweist, wobei jeweils ein Sender und ein Empfänger ein zusammenarbeitendes Paar derart bilden, dass bei freiem Überwachungsbereich die Lichtstrahlen des Senders auf den zugeordneten Empfänger geführt sind und so eine Strahlachse des Lichtvorhangs bilden. Der Ausrichtempfänger ersetzt dann einen der Empfänger, so dass diese Strahlachse nur noch zur Ausrichtung der Sensoreinrichtung und nicht mehr zur Objektdetektion im Überwachungsbereich zur Verfügung steht. Prinzipiell kann der Ausrichtempfänger für den Fall, dass die Sensoreinrichtung im Bereich der Sicherheitstechnik eingesetzt wird, auch zur Objektdetektion eingesetzt werden. Prinzipiell kann dabei das optische Verhalten des Ausrichtempfängers geändert werden, je nachdem ob er zur Objektdetektion oder zum Ausrichten eingesetzt wird.

Gemäß einer vorteilhaften Ausführungsform der Erfindung ist die dem Ausrichtempfänger zugeordnete Sensoreinrichtung als Sicherheitssensor ausgebildet.

Mit einem derartigen Sicherheitssensor erfolgt allgemein eine Gefahrenbereichsüberwachung an einem Arbeitsmittel wie einer Maschine oder Anlage. Dabei wird mit dem Sicherheitssensor ein sicheres Schaltsignal in Abhängigkeit der durchgeführten Objektdetektion generiert, mit dem das Arbeitsmittel gesteuert wird. Der Arbeitsbetrieb des Arbeitsmittels wird nur dann vom Sicherheitssensor über das Schaltsignal freigegeben, wenn kein sicherheitskritisches Objekt im Überwachungsbereich erkannt wird. Wird dagegen ein solches Objekt erkannt geht der Sicherheitssensor in einen sicheren Zustand derart, dass mit dem Schaltsignal das Arbeitsmittel stillgesetzt wird.

Vorteilhaft weist der Sicherheitssensor oder der dort integrierte Ausrichtempfänger Mittel auf, mittels derer während des Ausrichtens der Sicherheitssensor in einen sicheren Zustand überführt ist.

Damit ist sichergestellt, dass während des Ausrichtens keine Gefahrensituationen aufgrund des im Ausrichtbetrieb befindlichen Sicherheitssensors entstehen. Die Überführung in den sicheren Zustand kann beispielsweise derart erfolgen, dass der Ausrichtempfänger, der auf den Sicherheitssensor aufgesetzt wird, immer einen weiteren Empfänger abdeckt, so dass die Lichtstrahlen des zugehörigen Senders nicht mehr empfangen werden, was einem Objekteingriff im Überwachungsbereich entspricht.

Die Erfindung wird im Folgenden anhand der Zeichnungen erläutert. Es zeigen.
- Figur 1:: Schematische Darstellung einer als Lichtvorhang ausgebildeten Sensoreinrichtung.
- Figur 2:: Sensoreinrichtung gemäß Figur 1 mit einer daran angeordneten Ausrichtempfängereinheit.
- Figur 3:: Querschnittsdarstellung der Anordnung gemäß Figur 2.
- Figur 4:: Schematische Darstellung einer Sensoreinrichtung mit einer Sendereinheit, einer Empfängereinheit und zwei Umlenkeinheiten.
- Figur 5:: Anordnung gemäß Figur 4 mit einer Ausrichtempfängereinheit.

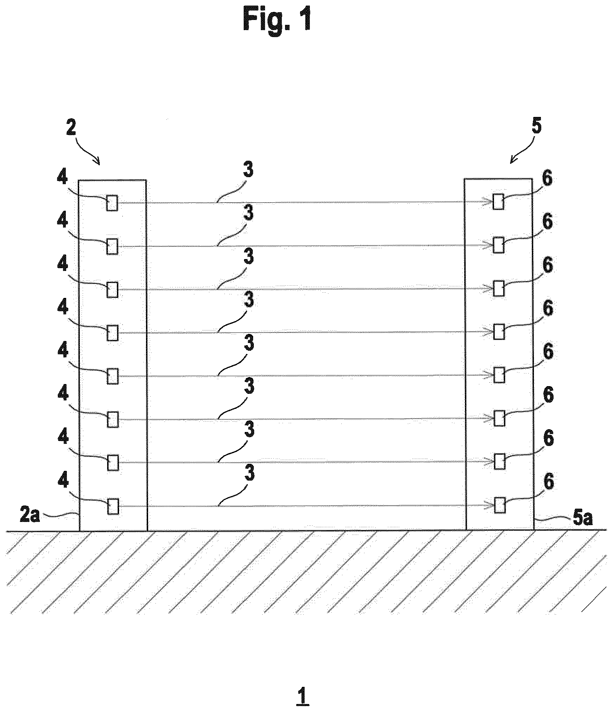

Figur 1 zeigt ein erstes Ausführungsbeispiel einer Sensoreinrichtung 1 in Form eines Lichtvorhangs. Der Lichtvorhang umfasst eine Sendereinheit 2 mit einem Gehäuse 2a, in welchem mehrere Lichtstrahlen 3 emittierende Sender 4 angeordnet sind. Die Sender 4 bestehen vorteilhaft aus Leuchtdioden, die im Infrarotbereich, also im unsichtbaren Wellenlängenbereich, Licht emittieren. Der Lichtvorhang umfasst weiterhin eine Empfängereinheit 5 mit einem Gehäuse 5a, in welchem Empfänger 6 zum Empfangen der Lichtstrahlen 3 angeordnet sind. Die Empfänger 6 sind vorteilhaft von Photodioden gebildet.

Der Lichtvorhang dient zur Überwachung von Objekten in einem Überwachungsbereich. Die Sendereinheit 2 und die Empfängereinheit 5 sind an gegenüberliegenden Rändern des Überwachungsbereichs angeordnet. Jeweils ein Sender 4 ist einem Empfänger 6 so zugeordnet, dass bei freiem Überwachungsbereich wie in Figur 1 dargestellt, die Lichtstrahlen 3 des Senders 4 ungehindert auf den zugeordneten Empfänger 6 treffen. Die so gebildeten Sender-/ Empfängerpaare werden durch nicht dargestellte Steuermittelt zyklisch nacheinander aktiviert. Die von den Lichtstrahlen 3 gebildeten Strahlachsen verlaufen in einer Ebene, die den Überwachungsbereich bildet. Bei einem Objekteingriff in den Überwachungsbereich wird durch das Objekt wenigstens eine Strahlachse unterbrochen. Die Objektdetektion erfolgt durch eine Amplitudenbewertung der Empfangssignale der Empfänger 6. Vorzugsweise werden die Empfangssignale in einer nicht dargestellten Auswerteeinheit mit einem Schwellwert bewertet. Dadurch wird ein binäres Schaltsignal generiert, das über einen Schaltausgang ausgegeben wird. Die Schaltzustände des Schaltsignals geben an, ob sich ein Objekt im Überwachungsbereich befindet oder nicht.

Vor dem Arbeitsbetrieb des Lichtvorhangs, während dessen mit dem Lichtvorhang die Objektdetektion erfolgt, müssen die Sendereinheit 2 und die Empfängereinheit 5 gegeneinander ausgerichtet werden.

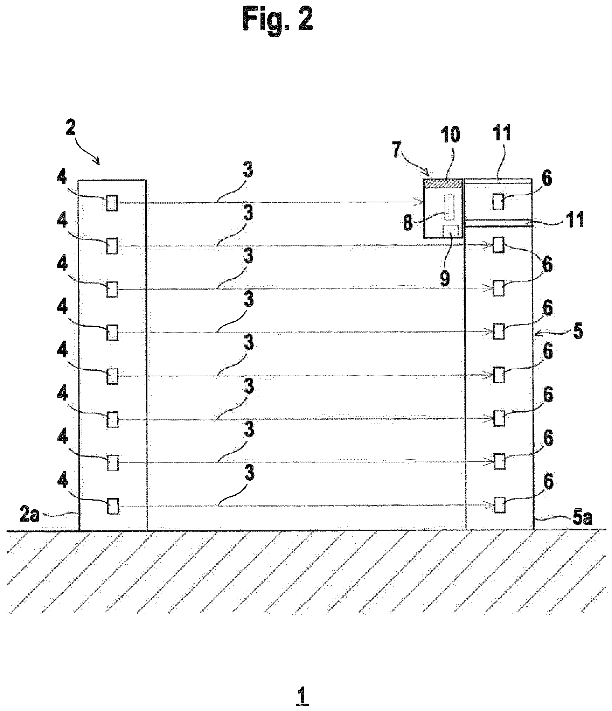

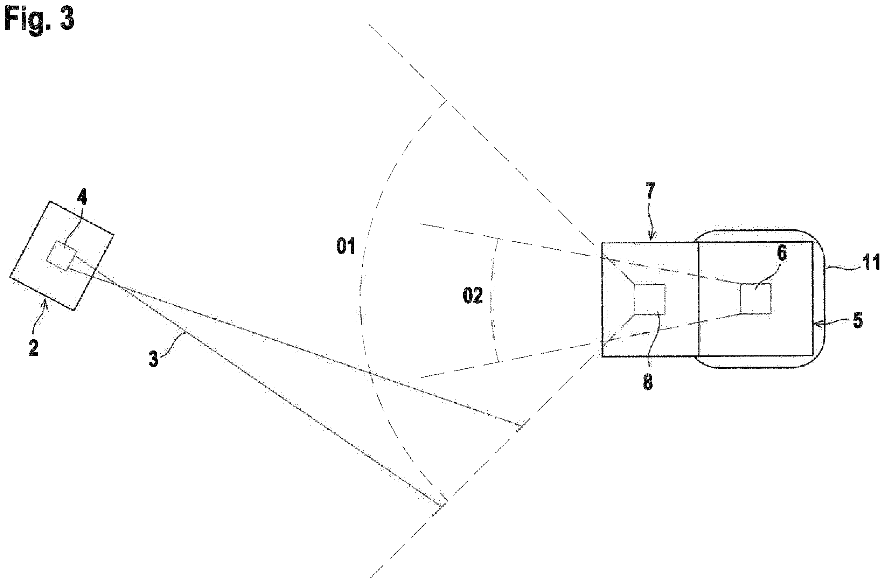

Erfindungsgemäß wird hierzu eine Ausrichtempfängereinheit 7 mit einem Ausrichtempfänger 8 eingesetzt, wie in den Figuren 2 und 3 dargestellt. Die Ausrichtempfängereinheit 7 weist weiterhin eine Rechnereinheit 9 sowie eine Anzeigeeinheit 10 auf. Die Anzeigeeinheit 10 ist im vorliegenden Fall von einer Leuchtdiode gebildet, die mit einer vorgegebenen Frequenz blinkt und sichtbares Licht abstrahlt. Weiterhin weist die Anzeigeeinheit 10 als Befestigungsmittel Klettbänder 11 auf.

Wie die Figuren 2 und 3 zeigen, wird die Ausrichtempfängereinheit 7 mit den Klettbändern 11 so an der Empfängereinheit 5 fixiert, dass der Ausrichtempfänger 8 exakt vor einem der Empfänger 6 der Empfängereinheit 5 angeordnet ist. Im vorliegenden Fall ist der Ausrichtempfänger 8 vor dem obersten Empfänger 6 angeordnet, jedoch kann die Ausrichtempfängereinheit 7 vor einem beliebigen Empfänger 6 angeordnet sein.

Insbesondere für den Fall, dass die Strahlkegel der Lichtstrahlen 3 so ausgebildet sind, dass diese bei freiem Strahlengang auf mehrere Empfänger 6 treffen, ist es zweckmäßig, die Ausrichtempfängereinheit 7 nicht vor einem Empfänger 6 am Rand der Empfängereinheit 5 sondern vor einem zentralen Empfänger 6 anzuordnen. Da dann der Ausrichtempfänger 8 die Lichtstrahlen 3 mehrerer Sender 4 empfängt, wird die Güte der Ausrichtung verbessert. Insbesondere können abweichende Strahlcharakteristiken der Lichtstrahlen 3 kompensiert werden.

Durch die Anbringung der Ausrichtempfängereinheit 7 vor dem obersten Empfänger 6 treffen die Lichtstrahlen 3 des zugeordneten Senders 4 nicht mehr auf den Empfänger 6 des Lichtvorhangs, sondern auf den vorgeordneten Ausrichtempfänger 8. Die auf den Ausrichtempfänger 8 auftreffende Lichtmenge wird in der Rechnereinheit 9 der Ausrichtempfängereinheit 7 erfasst und als Ausgangsgröße an der Anzeigeeinheit 10 angezeigt.

Damit mit dem Ausrichtempfänger 8 selektiv nur Licht des Senders 4 des Lichtvorhangs erfasst wird, können diesem optische Filter zur Ausfilterung von Fremdlicht, insbesondere Raumlicht, vorgeordnet sein. Weiterhin können elektrische Filter vorgesehen sein, die dafür sorgen, dass im Ausrichtempfänger 8 nur Licht registriert wird, das der Pulsfrequenz der Lichtstrahlen 3 des Senders 4 entspricht.

Wie aus der Querschnittsdarstellung von Figur 3 ersichtlich, weist der Ausrichtempfänger 8 einen Öffnungswinkel 01 auf, der erheblich größer ist als der Öffnungswinkel 02 der Empfänger 6 des Lichtvorhangs.

Damit kann der Ausrichtempfänger 8 auch dann für eine Ausrichtung verwendet werden, wenn die Lichtstrahlen 3 des Senders 4 vom begrenzten Öffnungswinkel 02 des Empfängers 6 nicht mehr erfasst werden, wohl aber vom Öffnungswinkel 01 des Ausrichtempfängers 8. Diese Situation ist in Figur 3 dargestellt. Die Längsachse der Sendereinheit 2 ist stark verdreht, so dass die Lichtstrahlen 3 des Senders 4 nicht mehr in den Öffnungswinkel 02 des Empfängers 6 fallen würden, also von diesem Empfänger 6 nicht mehr erfasst würden. Jedoch fallen die Lichtstrahlen 3 des Senders 4 noch in den Öffnungswinkel 01 des Ausrichtempfängers 8, so dass anhand der Signale des Ausrichtempfängers 8 und der dadurch an der Anzeigeeinheit 10 angezeigten Ausgangsgrößen eine Ausrichtung der Sendereinheit 2 relativ zur Empfängereinheit 5 vorgenommen werden kann.

Bei der in Figur 3 dargestellten Situation ist die Sendereinheit 2 stark gegenüber der Empfängereinheit 5 dejustiert, so dass nur eine geringe Lichtmenge auf den Ausrichtempfänger 8 trifft. Dies wird als Ausgangsgröße an der Anzeigeeinheit 10 dadurch visualisiert, dass die die Anzeigeeinheit 10 bildende Leuchtdiode mit einer entsprechend geringen Blinkfrequenz blinkt. Die jeweilige Bedienperson dreht dann die Sendereinheit 2 um ihre Längsachse, um deren Ausrichtung bezüglich der Empfängereinheit 5 zu verbessern. Je besser die Ausrichtung ist, umso mehr Licht des Senders 4 gelangt auf den Ausrichtempfänger 8 und desto höher ist die Blinkfrequenz der Leuchtdiode. Ist die Sendereinheit 2 optimal auf die Empfängereinheit 5 ausgerichtet, blinkt die Leuchtdiode mit einer maximalen Blinkfrequenz oder sie strahlt Dauerlicht ab. Auf diese Weise kann die Bedienperson die Sendereinheit 2 exakt auf die Empfängereinheit 5 ausrichten.

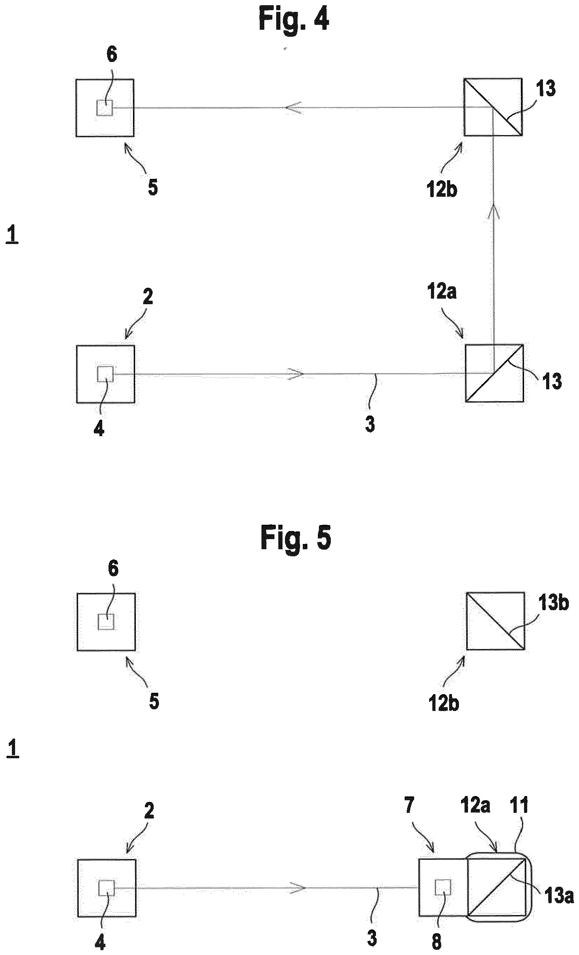

Figur 4 zeigt eine Erweiterung der Sensoreinrichtung 1 gemäß Figur 1. Zusätzlich zur Sendereinheit 2 und zur Empfängereinheit 5 weist die Sensoreinrichtung 1 gemäß Figur 4 zwei Umlenkeinheiten 12a, 12b mit jeweils einem Umlenkspiegel 13a, 13b auf. Vorzugsweise sind die Umlenkeinheiten 12a, 12b identisch ausgebildet. Mit den Umlenkspiegeln 13a, 13b der Umlenkeinheiten 12a, 12b erfolgt jeweils eine Umlenkung der Lichtstrahlen 3 der Sender 4 der Sendereinheit 2 um 90°. Nach zweimaliger Ablenkung der Lichtstrahlen 3 an den Umlenkeinheiten 12a ,12b treffen diese auf die Empfänger 6 der Empfängereinheit 5. Dabei verlaufen die Strahlachsen der Lichtstrahlen 3 stets parallel zueinander, was dadurch erreicht wird, dass die Längsachsen der Umlenkeinheiten 12a, 12b mit den Umlenkspiegeln 13a, 13b wie die Längsachsen der Sendereinheit 2 und Empfängereinheit 5 parallel zueinander in vertikaler Richtung verlaufen. Mit dieser Sensoreinrichtung 1 wird ein in drei vertikalen Ebenen verlaufender Überwachungsbereich überwacht.

Zur Justage dieser Sensoreinrichtung 1 wird wieder die Ausrichtempfängereinheit 7 gemäß den Figuren 2 und 3 eingesetzt. Die Justage erfolgt in diesem Fall in drei Schritten.

Der erste Justageschritt ist in Figur 5 veranschaulicht. Dort ist die Ausrichtempfängereinheit 7 an der ersten Umlenkeinheit 12a so angeordnet, dass die Lichtstrahlen 3 eines Senders 4 auf den Ausrichtempfänger 8 der Ausrichtempfängereinheit 7 treffen. Anhand der am Ausrichtempfänger 8 registrierten Lichtmenge erfolgt analog zum Beispiel der Figuren 2 und 3 die Ausrichtung der Sendereinheit 2 bezüglich der Umlenkeinheit 12a.

Danach erfolgt der zweite Justageschritt. Bei diesem Justageschritt wird die Ausrichtempfängereinheit 7 an der zweiten Umlenkeinheit 12b so angebracht, dass Lichtstrahlen 3 eines Senders 4 der Sendereinheit 2 von dem Sender 4 über den Umlenkspiegel 13a der ersten Umlenkeinheit 12a zum Ausrichtempfänger 8 an der zweiten Umlenkeinheit 12b geführt sind. Anhand der am Ausrichtempfänger 8 empfangenen Lichtmenge erfolgt analog zum Beispiel der Figuren 2 und 3 die Ausrichtung der Umlenkeinheit 12a bezüglich der Umlenkeinheit 12b.

Schließlich wird für einen dritten Justageschritt die Ausrichtempfängereinheit 7 vor einem Empfänger 6 der Empfängereinheit 5 fixiert. Bei diesem Justageschritt werden die Lichtstrahlen 3 des Senders 4 über die beiden Umlenkeinheiten 12a, 12b zu dem Ausrichtempfänger 8 geführt. Anhand der am Ausrichtempfänger 8 registrierten Lichtmengen und der daraus abgeleiteten, an der Anzeigeeinheit 10 angezeigten Ausgangsgröße wird die zweite Umlenkeinheit 12b bezüglich der Empfängereinheit 5 ausgerichtet.

### Bezugszeichenliste

- (1): Sensoreinrichtung
- (2): Sendereinheit
- (2a): Gehäuse
- (3): Lichtstrahlen
- (4): Sender
- (5): Empfängereinheit
- (5a): Gehäuse
- (6): Empfänger
- (7): Ausrichtempfängereinheit
- (8): Ausrichtempfänger
- (9): Rechnereinheit
- (10): Anzeigeeinheit
- (11): Klettband
- (12a, b): Umlenkeinheit
- (13a, b): Umlenkspiegel

## Patentansprüche

1. Verfahren zum Ausrichten einer Sensoreinrichtung (1), welche eine Sendereinheit (2) mit wenigstens einem Lichtstrahlen (3) emittierenden Sender (4) und eine Empfängereinheit (5) mit wenigstens einem dem Sender (4) zugeordneten Empfänger (6) aufweist, welcher in einem Arbeitsbetrieb der Sensoreinrichtung (1) die Lichtstrahlen (3) des Senders (4) empfängt, **dadurch gekennzeichnet, dass** zum Ausrichten der Sendereinheit (2) auf die Empfängereinheit (5) vor dem Empfänger (6) ein Ausrichtempfänger (8) platziert wird, welcher einen größeren Öffnungswinkel als der Empfänger (6) aufweist, dass mit dem Ausrichtempfänger (8) die vom Sender (4) emittierten Lichtstrahlen (3) empfangen werden, und dass abhängig von der am Ausrichtempfänger (8) empfangenen Lichtmenge der Lichtstrahlen (3) mit einer Anzeigeeinheit (10) eine Anzeige erfolgt.

2. Verfahren nach Anspruch 1, **dadurch gekennzeichnet, dass** die Sensoreinrichtung (1) eine Sendereinheit (2) mit mehreren Sendern (4) und eine Empfängereinheit (5) mit mehreren, den Sendern (4) der Sendereinheit (2) zugeordneten Empfängern (6) aufweist, und dass zum Ausrichten der Sendereinheit (2) auf die Empfängereinheit (5) der Ausrichtempfänger (8) vor einem der Empfänger (6) platziert wird, dass mit dem Ausrichtempfänger (8) die von dem diesem Empfänger (6) zugeordneten Sender (4) emittierten Lichtstrahlen (3) empfangen werden, und dass abhängig von der am Ausrichtempfänger (8) empfangenen Lichtmenge der Lichtstrahlen (3) mit einer Anzeigeeinheit (10) eine Anzeige erfolgt.

3. Verfahren nach Anspruch 2, **dadurch gekennzeichnet, dass** der Ausrichtempfänger (8) die Lichtstrahlen (3) mehrerer Sender (4) empfängt.

4. Verfahren nach einem der Ansprüche 1 bis 3, **dadurch gekennzeichnet, dass** die Sensoreinrichtung (1) zusätzlich zur Sendereinheit (2) und Empfängereinheit (5) eine Umlenkeinheit (12a, 12b) mit wenigstens einem Umlenkspiegel (13a, 13b) aufweist, wobei in einem Arbeitsbetrieb der Sensoreinrichtung (1) die von einem Sender (4) der Sendereinheit (2) emittierten Lichtstrahlen (3) über den Umlenkspiegel (13a, 13b) zu dem zugeordneten Empfänger (6) der Empfängereinheit (5) geführt werden, und dass zum Ausrichten der Sendereinheit (2) bezüglich der Umlenkeinheit (12a, 12b) der Ausrichtempfänger (8) vor dem Umlenkspiegel (13a, 13b) platziert wird.

5. Verfahren nach Anspruch 4, **dadurch gekennzeichnet, dass** nach Ausrichten der Sendereinheit (2) bezüglich der Umlenkeinheit (12a, 12b) zum Ausrichten der Umlenkeinheit (12a, 12b) bezüglich der Empfängereinheit (5) der Ausrichtempfänger (8) vor dem zugeordneten Empfänger (6) der Empfängereinheit (5) platziert wird.

6. Verfahren nach einem der Ansprüche 1 bis 5, **dadurch gekennzeichnet, dass** das Ausrichten der Sensoreinrichtung (1) während eines dem Arbeitsbetrieb der Sensoreinrichtung (1) vorgelagerten Ausrichtbetriebs erfolgt.

7. Ausrichtempfängereinheit (7) mit einem Ausrichtempfänger (8) zum Ausrichten einer Sensoreinrichtung (1) gemäß dem Verfahren der Ansprüche 1-6, wobei die Ausrichtempfängereinheit (7) eine Rechnereinheit (9) aufweist, in der am Ausgang des Ausrichtempfängers (8) anstehende Signale ausgewertet werden, wobei in Abhängigkeit der Signale in der Rechnereinheit (9) Ausgangsgrößen generiert werden, die ein Maß für die Güte der Ausrichtung darstellen, und wobei die Rechnereinheiten (9) Mittel zum Übertragen der Ausgangsgröße an die Anzeigeeinheit (10) aufweisen, und wobei die Ausrichtempfängereinheit (7) Mittel zur Fixierung an einer Empfängereinheit (5) oder Umlenkeinheit (12a, 12b) aufweist.

8. Ausrichtempfängereinheit nach Anspruch 7, **dadurch gekennzeichnet, dass** der Ausrichtempfänger Filter zur Ausfilterung von Fremdlicht aufweist.

9. Ausrichtempfängereinheit nach einem der Ansprüche 7 oder 8, **dadurch gekennzeichnet, dass** eine Anzeigeeinheit (10) Bestandteil der Ausrichtempfängereinheit (7) ist.

10. Ausrichtempfängereinheit nach Anspruch 9, **dadurch gekennzeichnet, dass** die Anzeigeeinheit (10) in Form einer optischen Anzeige ausgebildet ist.

11. Ausrichtempfängereinheit nach einem der Ansprüche 7 oder 8, **dadurch gekennzeichnet, dass** die Rechnereinheit (9) Übertragungsmittel aufweist, mittels derer die Ausgangsgrößen an eine externe Anzeigeeinheit (10) übertragen werden.

12. Ausrichtempfängereinheit nach Anspruch 11, **dadurch gekennzeichnet, dass** die Übertragungsmittel von einer WLAN- oder Bluetooth-Schnittstelle gebildet sind.

13. Ausrichtempfängereinheit nach einem der Ansprüche 11 oder 12, **dadurch gekennzeichnet, dass** die externe Einheit ein Smartphone ist.

14. Ausrichtempfängereinheit nach einem der Ansprüche 7 bis 13, **dadurch gekennzeichnet, dass** der Ausrichtempfänger einem Sicherheitssensor zugeordnet ist.

15. Ausrichtempfängereinheit nach Anspruch 14, **dadurch gekennzeichnet, dass** Mittel vorgesehen sind, mittels derer während des Ausrichtens der Sicherheitssensor in einen sicheren Zustand überführt ist.

## Claims

1. Method for aligning a sensor device (1), which has a transmitter unit (2) with at least one transmitter (4) emitting light beams (3) and a receiver unit (5) with at least one receiver (6) associated with the transmitter (4),which receives the light beams (3) of the transmitter (4), in a working operation of the sensor device (1), **characterised in that** an alignment receiver (8) is placed in front of the receiver (6) to align the transmitter unit (2) with the receiver unit (5), **in that** the light beams (3) emitted by the transmitter (4) are received by the alignment receiver (8) and that displays signals, depending on the light quantity of the light beams (3) received at the alignment receiver (8), using a display unit (10).

2. Method according to Claim 1, **characterised in that** the sensor device (1) has a transmitter unit (2) with a plurality of transmitters (4) and a receiver unit (5) with a plurality of receivers (6) associated with the transmitters (4) of the transmitter unit (2) and in order to align the transmitter unit (2) with the receiver unit (5), the alignment receiver (8) is placed in front of one of the receivers (6), **in that** the light beams (3) emitted by the transmitter (4) allocated to that receiver (6) are received with the alignment receiver (8), and that displays signals, depending on the light quantity of the light beams (3) received at the alignment receiver (8), using a display unit (10).

3. A method according to claim 2, **characterised in that** the alignment receiver (8) receives the light beams (3) of a plurality of transmitters (4).

4. The method according to one of claims 1 to 3, **characterised in that** the sensor device (1) in addition to the transmitter unit (2) and receiver unit (5) has a deflection unit (12a, 12b) with at least one deflection mirror (13a, 13b), wherein in a working operation of the sensor device (1), light beams (3) emitted from a transmitter (4) of the transmitter unit (2) are guided via the deflection mirror (13a, 13b) to the associated receiver (6) of the receiver unit (5), and that the alignment receiver (8) is placed in front of the deflection mirror (13a, 13b) for aligning the transmitter unit (2) with respect to the deflection unit (12a, 12b).

5. A method according to claim 4, **characterized in that** after aligning the transmitter unit (2) with respect to the deflection unit (12a, 12b), the alignment receiver (8) is placed in front of the associated receiver (6) of the receiver unit (5) for aligning the deflection unit (12a, 12b) with respect to the receiver unit (5).

6. A method according to one of claims 1 to 5, **characterised in that** the alignment of the sensor device (1) takes place during an alignment operation preceding the operation of the sensor device (1).

7. An alignment receiver unit (7) having an alignment receiver (8) for aligning a sensor device (1) according to the method of claims 1-6, wherein the alignment receiver unit (7) comprises a computer unit (9), in which pending signals at the output of the alignment receiver (8) are evaluated, wherein output variables are generated in response to the signals in the computer unit (9), which variables represent a measure of the quality of the alignment, and
wherein the computer units (9) have means for transmitting the output to the display unit (10) and wherein the alignment receiver unit (7) comprises means for fixing to a receiver unit (5) or deflection unit (12a, 12b).

8. An alignment receiver unit according to claim 7, **characterised in that** the alignment receiver has filters for filtering out extraneous light.

9. An alignment receiver unit according to one of claims 7 or 8, **characterised in that** the display unit (10) is part of the alignment receiver unit (7).

10. An alignment receiver unit unit according to claim 9; **characterised in that** the display unit (10) is designed in the form of an optical display.

11. An alignment receiver unit according to one of claims 7 or 8, **characterised in that** the computer unit (9) comprises transmission means by means of which the output variables are transmitted to an external display unit (10).

12. An alignment receiver unit according to claim 11, **characterized in that** the transmission means are formed by a WLAN or Bluetooth interface.

13. An alignment receiver unit according to one of the claims 11 or 12, **characterised in that** the external unit is a smartphone.

14. An alignment receiver unit according to one of the claims 7 to 13, **characterised in that** the alignment receiver is associated with a security sensor.

15. An alignment receiver unit according to claim 14, **characterised in that** means are provided so that during the alignment procedure, the safety sensor is transferred to a safe state.

## Revendications

1. Procédé d'alignement d'un dispositif capteur (1) qui présente une unité émettrice (2) avec au moins un émetteur (4) émettant des faisceaux lumineux (3) et une unité réceptrice (5) avec au moins un récepteur (6) associé à l'émetteur (4), lequel récepteur reçoit les faisceaux lumineux (3) de l'émetteur (4) dans un mode de travail du dispositif capteur (1), **caractérisé en ce qu'**un récepteur d'alignement (8) qui présente un angle d'ouverture plus grand que le récepteur (6) est placé devant le récepteur (6) pour aligner l'unité émettrice (2) sur l'unité réceptrice (5), **en ce que** les faisceaux lumineux (3) émis par l'émetteur (4) sont reçus avec le récepteur d'alignement (8), et **en ce qu'**un affichage est réalisé avec une unité d'affichage (10) en fonction de la quantité de lumière des faisceaux lumineux (3) reçue au récepteur d'alignement (8).

2. Procédé selon la revendication 1, **caractérisé en ce que** le dispositif capteur (1) présente une unité émettrice (2) avec plusieurs émetteurs (4) et une unité réceptrice (5) avec plusieurs récepteurs (6) associés aux émetteurs (4) de l'unité émettrice (2), **en ce que** le récepteur d'alignement (8) est placé devant l'un des récepteurs (6) pour aligner l'unité émettrice (2) sur l'unité réceptrice (5), **en ce que** les faisceaux lumineux (3) émis par l'émetteur (4) associé à ce récepteur (6) sont reçus avec le récepteur d'alignement (8), et **en ce qu'**un affichage est réalisé avec une unité d'affichage (10) en fonction de la quantité de lumière des faisceaux lumineux (3) reçue au récepteur d'alignement (8).

3. Procédé selon la revendication 2, **caractérisé en ce que** le récepteur d'alignement (8) reçoit les faisceaux lumineux (3) de plusieurs émetteurs (4).

4. Procédé selon l'une des revendications 1 à 3, **caractérisé en ce que** le dispositif capteur (1) présente, en plus de l'unité émettrice (2) et de l'unité réceptrice (5), une unité de déviation (12a, 12b) avec au moins un miroir de déviation (13a, 13b), les faisceaux lumineux (3) émis par un émetteur (4) de l'unité émettrice (2) étant guidés par le miroir de déviation (13a, 13b) vers le récepteur associé (6) de l'unité réceptrice (5) dans un mode de travail du dispositif capteur (1), et **en ce que** le récepteur d'alignement (8) est placé devant le miroir de déviation (13a, 13b) pour aligner l'unité émettrice (2) par rapport à l'unité de déviation (12a, 12b).

5. Procédé selon la revendication 4, **caractérisé en ce qu'**après l'alignement de l'unité émettrice (2) par rapport à l'unité de déviation (12a, 12b) pour aligner l'unité de déviation (12a, 12b) par rapport à l'unité réceptrice (5), le récepteur d'alignement (8) est placé devant le récepteur associé (6) de l'unité réceptrice (5).

6. Procédé selon l'une des revendications 1 à 5, **caractérisé en ce que** l'alignement du dispositif capteur (1) a lieu pendant un mode d'alignement précédant le mode de travail du dispositif capteur (1).

7. Unité réceptrice d'alignement comprenant un récepteur d'alignement (8) pour aligner un dispositif capteur (1) selon le procédé des revendications 1 à 6, laquelle unité réceptrice d'alignement (7) présente une unité de traitement (9) dans laquelle les signaux présents à la sortie du récepteur d'alignement (8) sont évalués, dans laquelle unité réceptrice d'alignement (7), en fonction des signaux dans l'unité de traitement (9), sont générées des grandeurs de sortie qui représentent une mesure de la qualité de l'alignement, dans laquelle unité réceptrice d'alignement (7) les unités de traitement (9) présentent des moyens pour transmettre la grandeur de sortie à l'unité d'affichage (10), et laquelle unité réceptrice d'alignement (7) présente des moyens pour la fixation à une unité réceptrice (5) ou une unité de déviation (12a, 12b).

8. Unité réceptrice d'alignement selon la revendication 7, **caractérisée en ce que** le récepteur d'alignement présente des filtres pour filtrer la lumière étrangère.

9. Unité réceptrice d'alignement selon l'une des revendications 7 ou 8, **caractérisée en ce que** l'unité d'affichage (10) fait partie de l'unité réceptrice d'alignement (7).

10. Unité réceptrice d'alignement selon la revendication 9, **caractérisée en ce que** l'unité d'affichage (10) se présente sous la forme d'un affichage optique.

11. Unité réceptrice d'alignement selon l'une des revendications 7 ou 8, **caractérisée en ce que** l'unité de traitement (9) présente des moyens de transmission au moyen desquels les grandeurs de sortie sont transmises à une unité d'affichage externe (10).

12. Unité réceptrice d'alignement selon la revendication 11, **caractérisée en ce que** les moyens de transmission sont formés par une interface WLAN ou Bluetooth.

13. Unité réceptrice d'alignement selon l'une des revendications 11 ou 12, **caractérisée en ce que** l'unité externe est un smartphone.

14. Unité réceptrice d'alignement selon l'une des revendications 7 à 13, **caractérisée en ce que** le récepteur d'alignement est associé à un capteur de sécurité.

15. Unité réceptrice d'alignement selon la revendication 14, **caractérisé en ce qu'**il est prévu des moyens par lesquels le capteur de sécurité est mis dans un état sûr pendant l'alignement.
